(19) Europäisches Patentamt

European Patent Office

Office européen des brevets

(11) **EP 1 616 469 A1**

(12) **EUROPEAN PATENT APPLICATION**

(43) Date of publication:
**18.01.2006 Bulletin 2006/03**

(51) Int Cl.:
***A01B 63/111*** *(2006.01)*

(21) Application number: **05013215.8**

(22) Date of filing: **20.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **22.06.2004 GB 0414009**

(71) Applicant: **AGCO SA
60026 Beauvais (FR)**

(72) Inventor: **Chauvel, Vincent
35590 Saint Gilles (FR)**

(74) Representative: **Morrall, Roger
AGCO Limited,
P.O. Box 62,
Banner Lane
Coventry CV4 9GF (GB)**

(54) **Implement control systems**

(57)     A system for controlling a ground engaging implement (10) mounted on a tractor (11) via a mounting linkage (12,13), the system has a sensing system (15 to 30) for providing a signal representative of only the horizontal component (Dx) of the forces (D) applied to the implement (10) by the ground thereby eliminating the effect of the weight of the implement from the sensed signal. A positioning means (32) is provided for controlling the height of the mounting linkage (12,13) relative to the tractor and a control means (33) which receives signals from the sensing system and from the tractor operator (35,36) as to the desired operating condition of the implement. The control means (33) compares these signals to provide an output signal to the positioning means (32) to adjust the working position of the implement (10) to meet the desired operating condition of the implement.

Fig. 1

EP 1 616 469 A1

## Description

This invention relates to implement control systems for controlling a ground engaging implement mounted and a tractor via a linkage having a pair of lower links and at least one top link. The invention is primarily concerned with control systems for front linkages but is also applicable to the control of rear linkages for mounting an implement on the rear of a tractor.

Whilst front such linkages are well known, problems arise with the control of implements mounted on such front linkages, since, contrary to implements mounted on the rear of a tractor which are inherently stable in their operation, front mounted implements exhibit instability and the forces applied to the top link can give misleading indications as to the actual forces applied to the implements by the ground.

It is an object of the present invention to provide an implement control system which is particularly suitable for use with a front linkage and which at least reduces the above problems.

Thus according to the present invention there is provided a system for controlling a ground engaging implement mounted on a tractor via a mounting linkage, the system comprising:-

- a sensing system for providing a signal representative of only the horizontal component of the forces applied to the implement by the ground thereby eliminating the effect of the weight of the implement from the sensed signal,
- a positioning means for controlling the height of the mounting linkage relative to the tractor,
- a control means which receives signals from the sensing system and from the tractor operator as to the desired operating condition of the implement and which compares these signals to provide an output signal to the positioning means to adjust the working position of the implement to meet the desired operating condition of the implement.

Such a system provides for a more stable control of front mounted implements since the instability inherent due to the effect of the weight of the implement on the upper link forces is eliminated.

The mounting linkage may comprise a pair of lower links and at least one upper link for supporting the implement from the tractor, the sensing means comprising a first linkage for connecting the lower links with a force sensor to transmit to the sensor only the horizontal component of the forces applied to the lower links by the implement and a second linkage connecting the (or each) upper link with the force sensor to transmit to the sensor only the horizontal component of the forces applied to the upper link (or links) by the implement.

The first linkage may include a first bell crank pivoted about a first generally horizontal and transverse axis relative to the tractor, the first bell crank having a first arm or arms connected with the lower links and a second arm of arms connected with an intermediate link to load the intermediate link with the horizontal component of the forces applied to the lower links and the second linkage includes a second bell crank pivoted about a second generally horizontal and transverse axis relative to the tractor, the second bell crank having a first arm or arms connected with the or each upper link and a second arm or arms connected with the intermediate link to load the intermediate link with the horizontal components of the forces applied to the upper link(s), the intermediate link being connected with the force sensor.

The force sensor may comprise an electrical force sensing pin, a hydraulic ram or any other suitable sensor.

In a further form of the system the mounting linkage comprises a pair of lower links and at least one upper link for supporting the implement from the tractor, the sensing means comprising electronic force sensing means to sense only the horizontal component of the forces applied to the upper and lower links by the implement, the control means receives these signals from the sensing means, compares the signals with the desired operating condition signal set by the tractor operator and generates an electrical output signal which controls the operation of the positioning means accordingly.

As will be appreciated, the positioning means preferably comprises hydraulic ram means connected with the mounting linkage so as to apply only a vertical force to the mounting linkage when the system is in use to control the implement and hence avoid any effect on the sensing system signal.

Other features of the invention are set out in the sub-claims.

One embodiment of the present invention will now be described, by way of example only, with reference to the accompanying drawings which:-

Figure 1 is a perspective view of an implement control system for use with an implement mounted on the front of an agricultural tractor;

Figure 2 is a diagrammatic view of the system of Figure 1;

Figure 3 shows the forces applied to the linkage of the system of figures 1 and 2, and

Figure 4 shows the forces applied to the linkage of the system when mounting a rear implement.

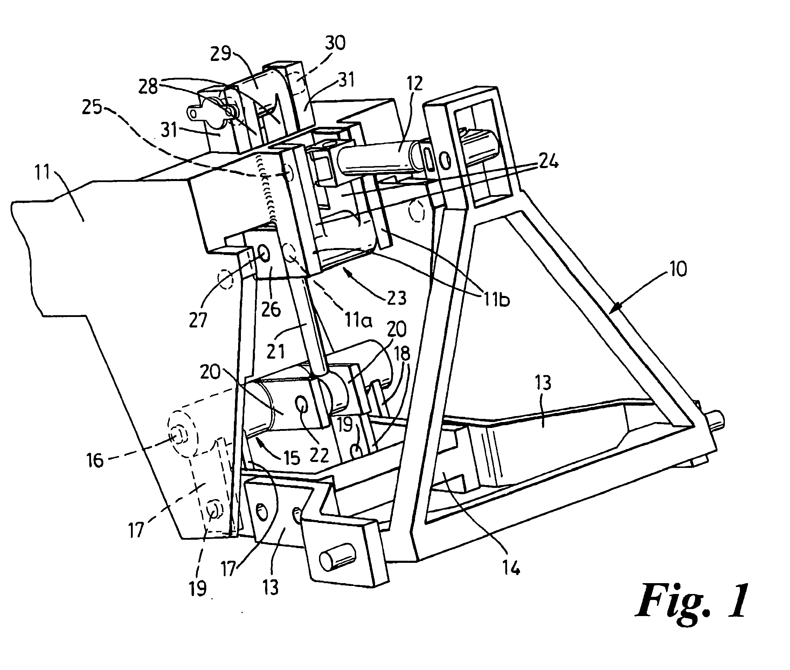

Referring to Figure 1 this shows an implement control system for use with an implement 10 (shown diagrammatically) mounted on the front of an agricultural tractor. The implement is mounted on the tractor via a frame 11 which is bolted to the tractor chassis (not shown).An upper link 12 and the pair of lower links 13 connect the implement with the frame 11. The lower links are connected via a bracing piece 14 which is in turn connected with a lower bell crank member 15 which is pivoted on frame 11 about a pin 16. Bell crank member 15 has two pairs of lower arms 17,18 within which the bracing piece 14 is connected by pins 19 and a pair of upper arms 20 within which a link 21 is connected via a pin 22.

The upper link 12 is connected with an upper bell crank member 23 which is pivoted on frame 11 via a pin 11a which extends through frame flanges 11b. Bell crank 23 has an upper pair of arms 24 which receive between them one end of the upper link 12 via a pin 25 and a lower pair of arms 26 which are connected with the other end of link 21 via a pin 27. Lower arms 26 are also connected via pin 27 with links 28 which are attached to a tube 29 within which an electrical draft force sensing pin 30 is mounted. Pin 30 mounts the tube 29 to the frame 11 via pillars 31.

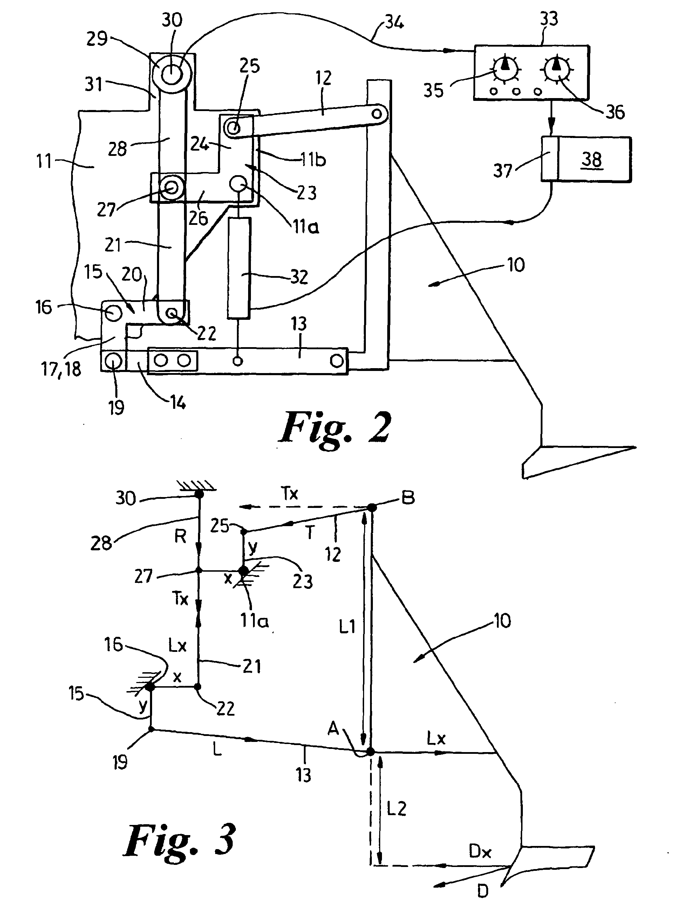

A hydraulic cylinder, not shown in Figure 1 but visible diagrammatically as 32 in Figure 2, acts between the frame 11 and each of the lower links 13 to raise/lower the links and hence the implement 10 relative to the frame. The line of action of cylinder 32 passes through pivot pin 11a and is arranged to be vertical when the linkage is in its so-called "neutral" position when the system is being used to control implement 10. This ensures that cylinder 32 does not apply any turning movement to either of the bell cranks 15 and 23 and hence any vertical adjustment of the position of the implement of the position of the implement has no effect on the forces sensed by sensing pin 30. In the "neutral" position bell crank arms 17, 18 and 24 are also arranged to be vertical.

The geometry of the bell crank linkage arrangement described above which connects the lower links 13 and the upper link 12 to the frame 11 is such that in the "neutral" position the effect on the top link 12 of the weight of the implement 10 is eliminated from the forces sensed by the sensing pin. This can be shown by an analysis of the forces acting in the linkage as follows.

Referring to Figure 3, when the lower links 13 are raised to position the implement 10 clear of the ground so that only the weight of the implement is loading the linkage.

In this condition it can be seen that linkage applies a force L with a horizontal component Lx to the implement 10 via lower links 13 and a force T with a horizontal component Tx to the implement via the upper link 12.

These forces act in opposite directions and are equal to each other thus Lx = Tx.

Now, considering the forces acting on link 21, with the linkage in its so-called "neutral" position (i.e. with the bell crank arm 17, 18 and 24 vertical) and assuming that the lengths of the bell crank arms are in the ratio 24/26 = (17,18)/20 it can be seen that bell crank 15 applies a force equal to Lx to link 21.

Similarly, bell crank 23 applies a force equal to Tx to link 21.

The only other force acting on link 21 is the reaction force R applied to link 21 by links 28 which is in effect the force which the sensing pin 30 will measure.

Thus we can say, considering the forces acting on link 21 that

$$Tx + Lx + R = 0$$

Since we know that Tx and Lx are equal and opposite
 therefore Tx-Tx+R=0
therefore R=0

Thus the senor 30 sees no force in links 28 due to the weight of implement 10.

If one now considers the implement in a ground engaging condition in which the ground applies a force D to the implement with a horizontal component Dx it can be seen, taking moments about a point A of the implement, that

$$Tx \,.\, L1 = Dx.\, L2$$

(where L1 and L2 are the dimensions of the implement marked in Figure 3).

Similarly, taking moments about point B then

$$Lx \,.L1 = Dx \,.(L1 + L2)$$

Since R = Lx - Tx from above

$$\text{Then } R = \frac{Dx.(L1 + L2)}{L1} - Dx.\frac{L2}{L1}$$

$$= \frac{Dx.L1}{L1} + \frac{Dx.L2}{L1} - \frac{Dx.L2}{L1}$$

therefore R=Dx

Thus, the force R applied to the sensing pin 30 equals the horizontal component of the force applied to the implement by the ground for all values of L1 and L2.

Thus the linkage eliminates the significance of the point at which the ground force is applied by the implement.

Typically the signal output from pin sensor 30 is passed to a cab mounted electronic control unit 33 via line 34. Unit 33 has various driver input devices, for example, control dials 35,36 for setting levels of draft force or implement position etc and the draft force levels set by the driver are compared with the signals received from pin sensor 30 and a control signal output is sent to solenoid control valve 37 of a hydraulic positioning unit 38 which supplies or exhausts pressurized hydraulic fluid to or from hydraulic cylinders 32 to raise or lower the implement as necessary to achieve the control settings set by the driver.

In a variation of the system described above, links 28 and pin sensor 30 could be replaced by a hydraulic cylinder which connects pin 27 to frame 11 with the level of pressure in this cylinder being used as the indication of the forces applied to link 21 by the upper link 12 and the lower links 13.

In a still further variation, lower links 13 and upper links 12 could be connected to frame 11 by electronic draft force sensors (e.g. pin sensors similar to sensor 30 described above). The three sensors would be designed to measure only the horizontal forces applied to implement 10 by the ground and this signals would be processed by an electronic control unit in which they are compared with the values set by the tractor driver to produce the appropriate control signal for use by hydraulic positioning unit 38.

With the sensing system of the present invention a more constant working depth of the implement can be achieved with resulting more constant power requirement to push the implement and less adjustment of the implement required by the driver. Also, no depth control wheel is required which means that more weight is taken on the front wheels of the tractor thus reducing wheel spin. It also means that the implement is shorter in length which make road travel easier.

Although the invention has been described above in relation to a front mounted implement it is also useful for use on rear mounted implements since the use of only the horizontal component of the forces acting on the implement as the control signal for the system again promotes greater system stability and enables the use of a hydraulic top link to vary ground reaction of the tractor and implement without affecting the draft force measured.

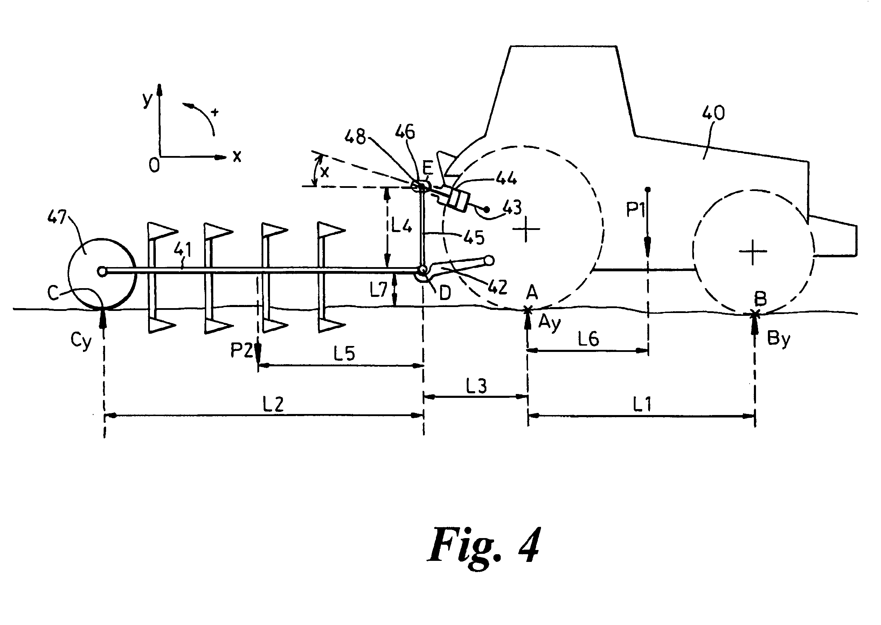

For example, Figure 4 shows diagrammatically a tractor 40 having a long implement 41 connected to the rear thereof by a pair of lower links 42 and a hydraulic top link 43. Implement 41 has a support wheel 47 and top link 43 includes a hydraulic cylinder 44 which can be pressurized by the hydraulic system of the tractor. The top link 43 is connected to the implement post 45 via an elongated slot 46 in which a pin 48 on the end of the top link slides.

Considering a static analysis of the forces acting on the implement 41.

Resolving vertically then:-

$$Cy + Dy + P2 + Ey = 0 \qquad \text{------------} \qquad \text{(equation 1)}$$

Where Cy = the vertical effect of the ground on the wheel 47 at contact point C
Dy = the vertical component of the force applied by draft links 42 to the implement 41 at point D
P2 = the weight of the implement 41 acting through its centre of gravity
Ey = the vertical component of the forces applied to the implement 41 by the top link 43 at point E.

Resolving horizontally then:-

$$Dx = Ex = 0 \quad \text{---------} \quad \text{(equation 2)}$$

where

Dx = the horizontal component of the force applied by draft links 42 to the implement 41 at point D.
Ex = the horizontal component of the force applied to the implement 41 by the top link 43 at point E.

Taking movements about point D then:

$$Ex.L4 + P2.L5 + Cy.L2 = 0 \quad \text{------------} \quad \text{(equation 3)}$$

Where L5 = the distance of the centre of gravity of the implement from point D
L2 = the distance of the point of contact of wheel 47 from point D.

Also the horizontal component Ex of the force E in top link 43 is equal to E.cos x where x i the angle of inclination of the top link to the horizontal.

$$\text{Therefore } Ex = E.\cos x \quad \text{------------} \quad \text{(equation 4)}$$

Now considering the static analysis of the forces acting on the tractor then resolving vertically

$$Ay = By = Pi - Ey - Dy = 0 \quad \text{------------} \quad \text{(equation 5)}$$

Where Ay = the vertical effect of the ground on the tractor at contact point A
By = the vertical effect of the ground on the tractor at contact point B
P1 = the weight of the tractor 40 acting through its centre of gravity.

Taking movements about point A then:-

$$Ex (L4 + L7) + Dy.L3 + Ey.L3 + By. L1 + P1.L6 = 0 \quad \text{------------} \quad \text{(equation 6)}$$

Where L4 = the distance between points D and E
L6 = the distance of the centre of gravity of the tractor from point A
L7 = the distance point D and the ground.

If the top link has no strain since pin 48 is in the mid region of the slot 46 then:-

The force E in top link 43 = 0
Therefore Ex = 0 and Ey = 0
Thus from equation 2 we can say that Dx = -Ex = 0

From equation 3:-

$$Cy = -(Ex.L4 = Pz.L5)/L2$$

And since Ex = E.cosx from equation 4 then :-

$$Cy = (-L4.(E \cos x) - L5.P2)/L2$$

From equation 1: -

$$Dy = -Cy - Pz - Ey$$

$$\text{therefore } Dy = \frac{(Ex.L4 = P2.L5)}{L2} - P2 - Ey$$

From equation 5:-

$$Ay = - (By + P1 - Dy - Ey)$$

$$= - By - P1 + Dy + Ey$$

And since Ey = sinx.E therefore

$$Ay = -By - P1 + Dy + \text{Sin } X.E$$

From equation 6:-

$$By = \frac{-P1.L6 - Ey.L3 - Dy.L3 - Ex (L4 + L7)}{L1}$$

therefore

$$By = [-P1.L6 - L3 (Ey + Dy) - E.\cos x (L4+L7)]/L1$$

It can therefore be seen from the above equations for Cy, Ay and By that if the top link is pressurized to increase the force E in the top link then:-

Cy decreases (since the negative value of the term containing E in the equation for Cy increases).
Ay increases (since the positive value of the term containing E in the equation for Ay increases), and
By decreases (since the negative value of the terms containing E in the equation for By increases.

Thus since Cy and By both decrease as the pressure in the top link is increased and Ay increases the rear wheel ground reaction can be varied by adjusting the pressure in the top link cylinder 44 to reduce rear wheel slip when ploughing. The objective is to have Ay = 2By when ploughing and when the implement is raised (and Cy = 0) then By should be greater than say lTon to retain a good steering capability.

Since, as demonstrated above, the implement control system of the present invention eliminates the effect of the weight of the implement from the draft forces sensed, the pressure in top link 44 can be varied between zero and its maximum (when the implement is raised with the support wheel 47 clear of the ground) without affecting the draft forces sensed.

The present invention thus also has significant benefits when used on a rear mounted implement.

**Claims**

1. A system for controlling a ground engaging implement (10) mounted on a tractor (11) via a mounting linkage (12,13), the system being **characterized by** comprising:-

   - a sensing system (15 to 30) for providing a signal representative of only the horizontal component (Dx) of the forces (D) applied to the implement by the ground thereby eliminating the effect of the weight of the implement from the sensed signal,
   - a positioning means (32, 38) for controlling the height of the mounting linkage (12,13) relative to the tractor,
   - a control means (33) which receives signals from the sensing system (16 to 30) and from the tractor operator (35,36) as to the desired operating condition of the implement and which compares these signals to provide an output signal to the positioning means (32) to adjust the working position of the implement (10) to meet the desired operating condition of the implement.

2. A system according to claim 1 **characterised in that** the mounting linkage comprises a pair of lower links (13) and at least one upper link (12) for supporting the implement (10) from the tractor (11), the sensing means comprising a first linkage (15 to 22, 27,28,29) for connecting the lower links (13) with a force sensor (30) to transmit to the sensor only the horizontal component (Dx) of the forces applied to the lower links by the implement (10) and a second linkage (23,24,25,26) connecting the (or each) upper link (12) with the force sensor (30) to transmit to the sensor only the horizontal component of the forces applied to the upper link (or links) by the implement.

3. A system according to claim 2 **characterised in that** the first linkage (15 to 22, 27,28,29) includes a first bell crank (15) pivoted about a first generally horizontal and transverse axis (16) relative to the tractor (11), the first bell crank having a first arm or arms (17,18) connected with the lower links (13) and a second arm of arms (20) connected with an intermediate link (21) to load the intermediate link with the horizontal component of the forces applied to the lower links and the second linkage (23 to 26) includes a second bell crank (23) pivoted about a second generally horizontal and transverse axis (11a) relative to the tractor, the second bell crank having a first arm or arms (24) connected with the or each upper link (12) and a second arm or arms connected (26) with the intermediate link (21) to load the intermediate link with the horizontal components of the forces applied to the upper link(s), the intermediate link being connected (27,28,29) with the force sensor (30).

4. A system according to claim 3 **characterised in that** the force sensor comprises an electrical force sensing pin (30) which receives the load applied to the intermediate link (21) by the upper and lower links (12,13), the sensing pin thus providing an electrical signal representing the horizontal component (Dx) of the load applied to the implement (10) by the ground.

5. A system according to claim 3 **characterised in that** the force sensor comprises a hydraulic cylinder connected with the intermediate link (21), the pressure of hydraulic fluid in the cylinder being used as an indication of he horizontal component (Dx) of the load applied to the implement (10) by the ground.

6. A system according to any on of claims 3 to 5 **characterised in that** the lower links (13) are connected by a bracing piece (14) which is in turn connected with the first bell crank (15).

7. A system according to claim 1 **characterised in that** the mounting linkage comprises a pair of lower links (13) and at least one upper link (12) for supporting the implement (10) from the tractor (11), the sensing means comprising electronic force sensing means to sense only the horizontal component of the forces applied to the upper and lower links by the implement, the control means (33) receives these signals from the sensing means, compares the signals with the desired operating condition signal set by the tractor operator and generates an electrical output signal which controls the operation of the positioning means (32,38) accordingly.

8. A system according to any one of claims 1 to 7 **characterised in that** the positioning means comprises hydraulic ram means (32) connected with the mounting linkage (12,13) so as to apply only a vertical force to the mounting linkage when the system is in use to control the implement (10) and hence avoid any effect on the sensing system signal.

9. A system according to any of claims 1 to 8 for mounting an implement on the front of the tractor.

10. A system according to any of claims 1 to 8 for mounting an implement on the rear of the tractor.

11. A system according to claim 9 or 10 **characterised in that** a hydraulic upper link (43) is used to enable the weight distribution of the associated tractor to be changed without affecting the operation of the system.

*Fig. 1*

EP 1 616 469 A1

*Fig. 2*

*Fig. 3*

*Fig. 4*

**EP 1 616 469 A1**

European Patent Office

## EUROPEAN SEARCH REPORT

Application Number

EP 05 01 3215

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 425 970 A (DWYER ET AL) 17 January 1984 (1984-01-17) | 1,2,7-10 | A01B63/111 |
| Y | * column 4, line 13 - line 65; figures * | 11 | |
| X | US 4 497 375 A (MUCHEYER ET AL) 5 February 1985 (1985-02-05) | 1,2,7,9, 10 | |
| Y | * column 1, line 9 - line 14 * <br> * column 6, line 15 - line 31; figures 1,6 * | 11 | |
| X | EP 0 713 637 A (NEW HOLLAND ITALIA S.P.A) 29 May 1996 (1996-05-29) | 1 | |
| A | * page 2, line 53 - page 3, line 1; figures * | 4 | |
| A | EP 0 293 478 A (ISEKI & CO., LTD) 7 December 1988 (1988-12-07) | 2,7 | |
| Y | * page 4, line 6 - line 8 * <br> * sentence 10 - sentence 13; figure 1 * | 11 | |
| X | DE 478 596 C (HARRY FERGUSON) 4 July 1929 (1929-07-04) | 1 | TECHNICAL FIELDS SEARCHED (Int.Cl.7) |
| A | * page 4, line 12 - line 110; figure 12 * | 3 | A01B |
| X | DE 11 16 461 B (THOMAS SMIRTHWAITE) 2 November 1961 (1961-11-02) | 1 | |
| A | * column 3, line 45 - column 4, line 10; figures * | 3 | |
| X | EP 0 694 422 A (NEW HOLLAND U.K. LIMITED) 31 January 1996 (1996-01-31) | 1 | |
| A | * column 2, line 17 - line 26; figures 1,2 * | 4 | |
| A | GB 628 907 A (HARRY FERGUSON INC) 7 September 1949 (1949-09-07) * page 2, line 94 - line 119; figure 1 * | 3 | |

The present search report has been drawn up for all claims

| Place of search | Date of completion of the search | Examiner |
|---|---|---|
| Munich | 6 September 2005 | Bunn, D |

**EP 1 616 469 A1**

### ANNEX TO THE EUROPEAN SEARCH REPORT
### ON EUROPEAN PATENT APPLICATION NO.

EP 05 01 3215

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2005

| Patent document cited in search report | | Publication date | Patent family member(s) | | Publication date |
|---|---|---|---|---|---|
| US 4425970 | A | 17-01-1984 | NONE | | |
| US 4497375 | A | 05-02-1985 | DE | 3110107 A1 | 23-09-1982 |
| | | | FR | 2501862 A1 | 17-09-1982 |
| | | | GB | 2094984 A ,B | 22-09-1982 |
| | | | IT | 1150324 B | 10-12-1986 |
| EP 0713637 | A | 29-05-1996 | EP | 0713637 A1 | 29-05-1996 |
| | | | DE | 69519661 D1 | 25-01-2001 |
| | | | DE | 69519661 T2 | 26-04-2001 |
| EP 0293478 | A | 07-12-1988 | JP | 2045585 C | 25-04-1996 |
| | | | JP | 7079565 B | 30-08-1995 |
| | | | JP | 63112906 A | 18-05-1988 |
| | | | EP | 0293478 A1 | 07-12-1988 |
| | | | WO | 8802982 A1 | 05-05-1988 |
| | | | KR | 9505391 B1 | 24-05-1995 |
| | | | US | 5113957 A | 19-05-1992 |
| DE 478596 | C | 04-07-1929 | NONE | | |
| DE 1116461 | B | 02-11-1961 | NONE | | |
| EP 0694422 | A | 31-01-1996 | US | 5190111 A | 02-03-1993 |
| | | | US | 5291407 A | 01-03-1994 |
| | | | US | 5143159 A | 01-09-1992 |
| | | | US | 5320186 A | 14-06-1994 |
| | | | EP | 0694422 A2 | 31-01-1996 |
| | | | DE | 69204749 D1 | 19-10-1995 |
| | | | DE | 69204749 T2 | 04-04-1996 |
| | | | DE | 69212242 D1 | 22-08-1996 |
| | | | DE | 69212242 T2 | 19-12-1996 |
| | | | DE | 69212737 D1 | 19-09-1996 |
| | | | DE | 69212737 T2 | 23-01-1997 |
| | | | DE | 69230009 D1 | 21-10-1999 |
| | | | DE | 69230009 T2 | 20-01-2000 |
| | | | EP | 0517419 A2 | 09-12-1992 |
| | | | EP | 0523834 A1 | 20-01-1993 |
| | | | EP | 0517426 A2 | 09-12-1992 |
| GB 628907 | A | 07-09-1949 | NONE | | |

EPO FORM P0459

For more details about this annex : see Official Journal of the European Patent Office, No. 12/82

13